# EUROPEAN PATENT APPLICATION

(11) **EP 4 711 630 A1**
(43) Date of publication of application: **18.03.2026**
(21) Application number: 25197645.2
(22) Date of filing: 22.08.2025
(51) Int. Cl.: F15B 13/08, F16K 27/00, F16K 31/06, E02F 9/22

(54) **CONTROL VALVE AND CONSTRUCTION MACHINE**

(30) Priority: 12.09.2024 JP 2024158430
(71) Applicant: NABTESCO CORPORATION, Chiyoda-ku Tokyo 102-0093 (JP)
(72) Inventor: Nishimura, Kenta, Tokyo, 102-0093 (JP); Shigaki, Tomio, Tokyo, 102-0093 (JP); Katsumata, Ryota, Tokyo, 102-0093 (JP); Mizuno, Seiichi, Iwata-shi, Shizuoka-ken, 438-0004 (JP); Tozawa, Shoji, Iwata-shi, Shizuoka-ken, 438-0004 (JP)
(74) Representative: Grünecker Patent- und Rechtsanwälte PartG mbB

(57) **Abstract**

The control valve (1) includes a plurality of proportional valve blocks (10) stacked in a stacking direction. Each proportional valve block (10) includes an electromagnetic proportional valve (11) for controlling supply of fluid from a supply source to the proportional valve block (10) and discharge of the fluid from the proportional valve block (10). The control valve (1) further includes a valve ECU (20) configured to output drive current for driving the electromagnetic proportional valves (11) through the plurality of drive lines (25). The valve ECU (20) is connected to each of the electromagnetic proportional valves (11) via corresponding one of the plurality of drive lines (25).

## Description

### TECHNICAL FIELD

The present disclosure relates to a control valve and a construction machine.

### BACKGROUND

In the construction machine disclosed in Japanese Patent Application Publication No. 2023-005536, the controller of a construction machine outputs a command signal to a proportional valve, and the proportional valve drives a control valve. The control valve regulates the flow rate and the supplying direction of hydraulic fluid supplied to a cylinder.

### SUMMARY

The construction machine disclosed in Japanese Patent Application Publication No. 2023-005536 has multiple control valves for the boom, arm, bucket, etc., and each control valve has multiple proportional valves. Therefore, the controller of the construction machine is connected to each proportional valve by electrical wiring, requiring complicated wiring works.

One aspect provides a control valve. The control valve comprises: a plurality of proportional valve blocks stacked together in a stacking direction, each proportional valve block including an electromagnetic proportional valve for controlling supply of fluid from a supply source to the proportional valve block and discharge of the fluid from the proportional valve block; and a valve control unit connected to each electromagnetic proportional valve by corresponding one of a plurality of drive lines, the valve control unit being configured to output drive current for driving the electromagnetic proportional valves through the plurality of drive lines.

In one embodiment, the valve control unit may receive from a main body control unit of a construction machine a drive signal for driving the electromagnetic proportional valves. In one embodiment, the valve control unit may have a connector for connection with the plurality of drive lines. In one embodiment, the electromagnetic proportional valve may be a first electromagnetic proportional valve, and the connector may be a first connector, each proportional valve block may further include a spool extending in an axial direction, a second electromagnetic proportional valve, and a second connector, and the first electromagnetic proportional valve and the second electromagnetic proportional valve may be provided on both sides of the spool in the axial direction, and the first connector and the second connector may be provided on both sides of the valve control unit in the axial direction.

In one embodiment, the electromagnetic proportional valve may be a first electromagnetic proportional valve, each proportional valve block may further include a spool extending in an axial direction and a second electromagnetic proportional valve, and the first electromagnetic proportional valve and the second electromagnetic proportional valve may be provided on both sides of the spool in the axial direction, and the connector may be provided on a surface of the valve control unit, the surface being perpendicular to a direction orthogonal to both the stacking direction and the axial direction of the spool.

In one embodiment, the electromagnetic proportional valve may be a first electromagnetic proportional valve, each proportional valve block may further include a spool extending in an axial direction and a second electromagnetic proportional valve, and the first electromagnetic proportional valve and the second electromagnetic proportional valve may be provided on both sides of the spool in the axial direction, and the connector may be provided on a surface of the valve control unit, the surface being perpendicular to the stacking direction.

In one embodiment, a supply port for supplying the fluid and a discharge port for discharging the fluid may be provided at one end of the plurality of proportional valve blocks in the stacking direction, and the valve control unit may be provided at another end of the plurality of proportional valve blocks in the stacking direction.

Another aspect provides a construction machine. The construction machine comprises: the control valve described above; and the main body control unit for outputting the drive signal.

Still another aspect provides a construction machine. The construction machine comprises: the control valve described above; and an operation unit for outputting an operation signal, wherein the valve control unit outputs drive current for driving the electromagnetic proportional valves based on the operation signal input from the operation unit.

### BRIEF DESCRIPTION OF THE DRAWINGS

Fig. 1 shows wiring of a control valve provided on a construction machine according to a first embodiment.
Fig. 2 is a top left perspective view showing the control valve according to the same embodiment.
Fig. 3 is a bottom right perspective view showing the control valve according to the same embodiment.
Fig. 4 is a left side view showing the control valve according to the same embodiment.
Fig. 5 is a right side view showing the control valve according to the same embodiment.
Fig. 6 is a plan view showing the control valve according to the same embodiment.
Fig. 7 is a bottom view showing the control valve according to the same embodiment.
Fig. 8 is a front view showing the control valve according to the same embodiment.
Fig. 9 is a rear view showing the control valve according to the same embodiment.
Fig. 10 is a top left perspective view showing a control valve according to a second embodiment.
Fig. 11 is a plan view showing the control valve according to the same embodiment.
Fig. 12 shows wiring of a control valve provided on a construction machine according to a modification example.

### DESCRIPTION OF THE PREFERRED EMBODIMENTS

### <First Embodiment>

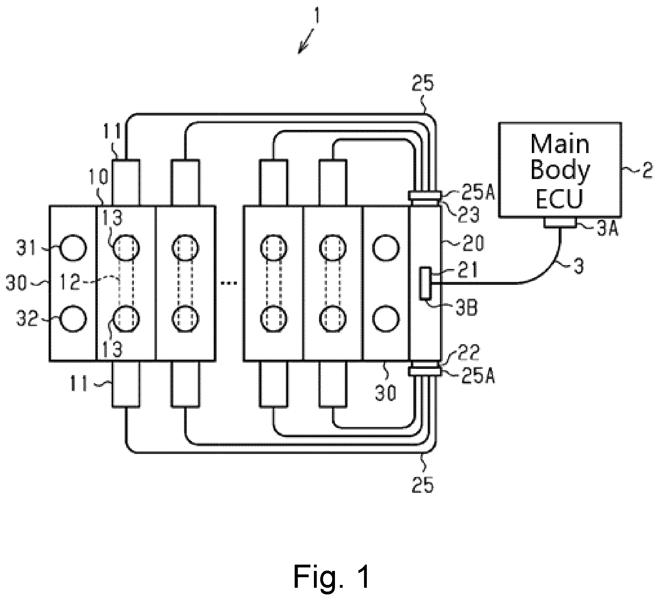

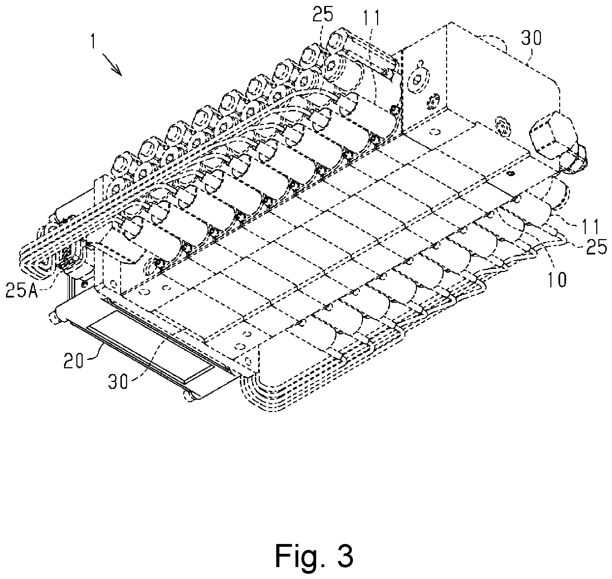

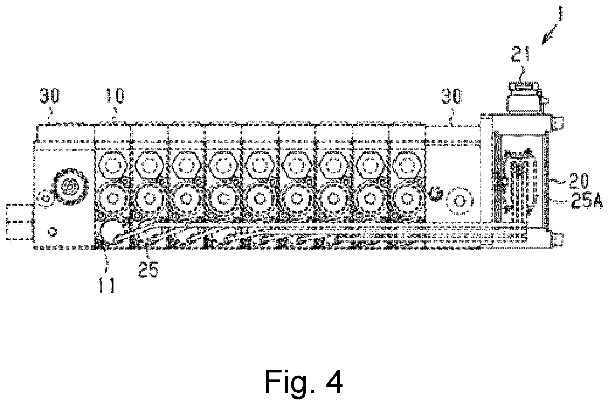

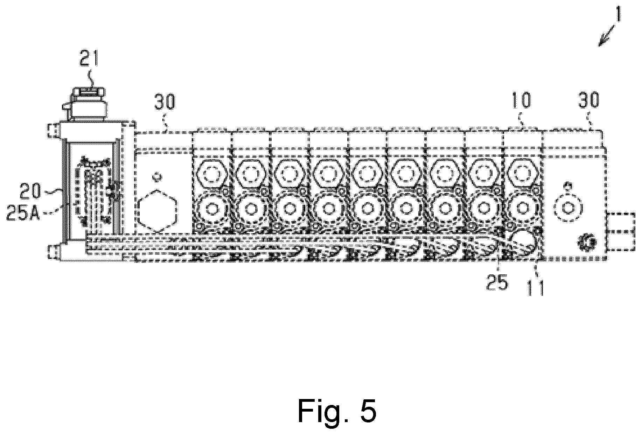

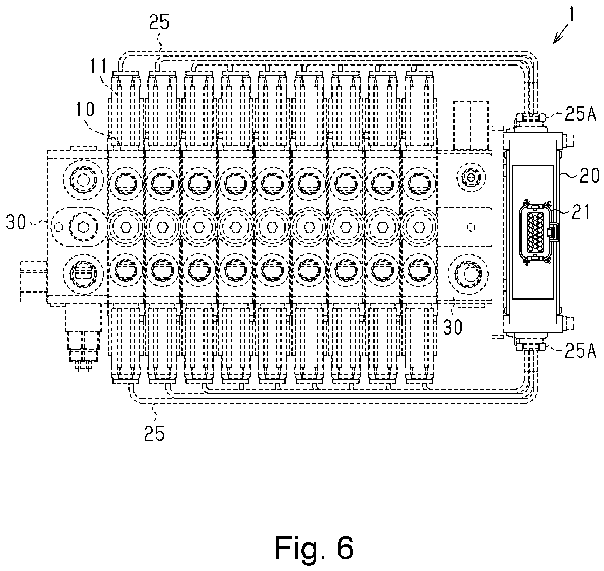

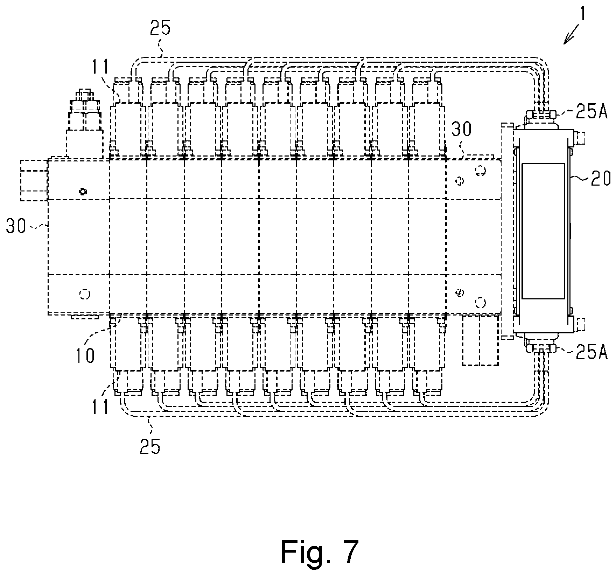

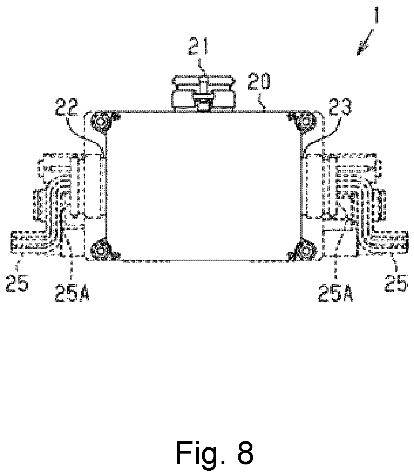

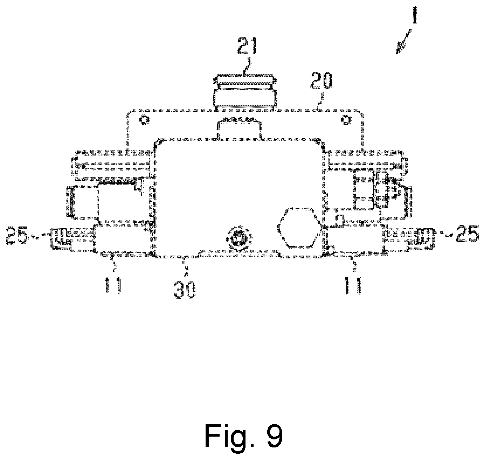

The first embodiment of the construction machine having a control valve will now be described with reference to Figs. 1 to 9.

### <Construction Machine>

As shown in Fig. 1, the construction machine includes a control valve 1, a main body ECU 2, and a control line 3. The control valve 1 is a valve that controls the flow of hydraulic fluid supplied from a pump as a supply source to a hydraulic actuator and the flow of hydraulic fluid discharged from the hydraulic actuator to a tank. For example, the hydraulic actuator is a hydraulic cylinder for moving an arm or boom of the construction machine. Alternatively, the hydraulic actuator may be a hydraulic motor or the like. A drive signal is input to the control valve 1 from the main body ECU 2 via the control line 3. The control line 3 transmits signals by means of signal communication such as CAN (Controller Area Network) communication. The signals are, for example, analog voltage signals, PWM (Pulse Width Modulation) signals, PS232C, RS485, etc. The main body ECU 2 corresponds to the main body control unit. The hydraulic fluid corresponds to the fluid.

### <Control Valve 1>

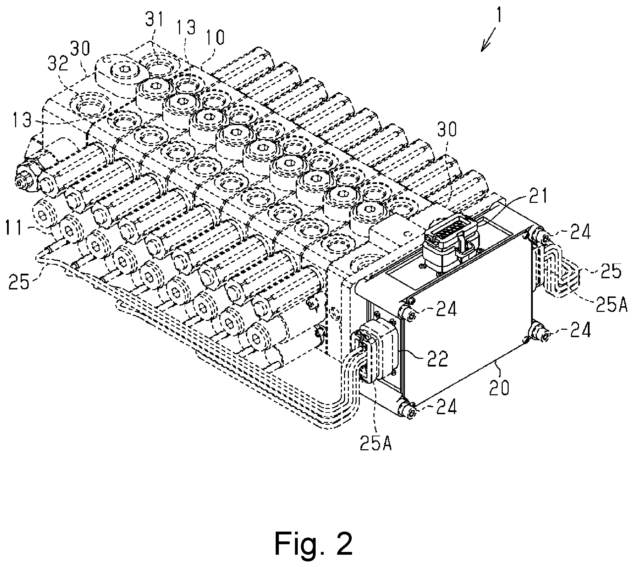

As shown in Figs. 2 to 9, the control valve 1 includes a plurality of proportional valve blocks 10, a valve ECU 20, hydraulic manifold blocks 30, and a plurality of drive lines 25. The proportional valve blocks 10 can be stacked together in the stacking direction, and the number of proportional valve blocks 10 stacked together is the same as the number of hydraulic actuators provided on the construction machine. In this embodiment, nine proportional valve blocks 10 are stacked together. The hydraulic manifold blocks 30 are provided on both ends of the proportional valve blocks 10 in the stacking direction. The hydraulic manifold block 30 at the first end, where the valve ECU 20 is provided, does not have a supply port 31 for supplying the hydraulic fluid and a discharge port 32 for discharging the hydraulic fluid. The hydraulic manifold block 30 at the second end, where the valve ECU 20 is not provided, has the supply port 31 and the discharge port 32. In other words, the valve ECU 20 is provided at the end of the stacked proportional valve blocks 10 where the supply port 31 and the discharge port 32 are not provided. Therefore, the valve ECU 20 is fixed by bolts 24 to the hydraulic manifold block 30 not having the supply port 31 and the discharge port 32. The valve ECU 20 corresponds to the valve control unit.

As shown in Fig. 1, each of the proportional valve blocks 10 has a pair of electromagnetic proportional valves 11, a spool 12 extending in the axial direction, and two connection ports 13. The pair of electromagnetic proportional valves 11 are provided on both sides of the spool 12 of the proportional valve block 10. The electromagnetic proportional valves 11 drive the spool 12 to control the supply and discharge of the hydraulic fluid supplied from the pump. The plurality of drive lines 25 connect the valve ECU 20 to each of the electromagnetic proportional valves 11. In other words, the valve ECU 20 is connected to each of the electromagnetic proportional valves via corresponding one of the plurality of drive lines 25. Each of the drive lines 25 conveys a drive current flowing from the valve ECU 20 to the electromagnetic proportional valve 11. The connection ports 13 are connected to the hydraulic actuators to supply and discharge the hydraulic fluid to and from the hydraulic actuators.

### <Valve ECU 20>

The valve ECU 20 receives a drive signal from the main body ECU 2 via the control line 3 and outputs drive current via the drive lines 25. The valve ECU 20 includes a top-surface connector 21, a left-side connector 22, and a right-side connector 23. The top-surface connector 21 is provided on the top surface of the valve ECU 20 in the direction perpendicular to the axial direction of the spools 12, and the top-surface connector 21 is connected to the control line 3. Specifically, in this embodiment, the top surface on which the top-surface connector 21 is provided is perpendicular to the direction orthogonal to both the stacking direction of the valve ECU 20 and the axial direction of the spools 12. The left-side connector 22 is provided on the left side of the valve ECU 20 and connected to the drive lines 25. The right-side connector 23 is provided on the right side of the valve ECU 20 and connected to the drive lines 25. In other words, the valve ECU 20 has the left-side connector 22 and the right-side connector 23 each connected to the drive lines 25. The left-side connector 22 and the right-side connector 23, which are connected to the electromagnetic proportional valves 11, are provided on both sides of the valve ECU 20 in the axial direction of the spools 12.

A main body-side connector 3A is provided at one end of the control line 3. A valve-side connector 3B is provided at the other end of the control line 3. The main body-side connector 3A is connected to the main body ECU 2. The valve-side connector 3B is connected to the top-surface connector 21 of the valve ECU 20.

The drive lines 25 connected to the electromagnetic proportional valves 11 on the left side are all connected at first ends thereof to a drive connector 25A on the left side. The drive connector 25A on the left side is connected to the left-side connector 22 of the valve ECU 20. The drive lines 25 connected to the electromagnetic proportional valves 11 on the right side are all connected at first ends thereof to a drive connector 25A on the right side. The drive connector 25A on the right side is connected to the right-side connector 23 of the valve ECU 20. The drive lines 25 are connected at second ends thereof to the electromagnetic proportional valves 11.

### <How First Embodiment Works>

The following now describes how the above-described control valve 1 works with reference to Figs. 1 to 9.

The control valve 1 includes the same number of proportional valve blocks 10 as the number of hydraulic actuators on the construction machine. These proportional valve blocks 10 are stacked together in the stacking direction. The hydraulic manifold blocks 30 are connected to both ends of the proportional valve blocks 10 in the stacking direction. The valve ECU 20 is then fixed by bolts 24 to the hydraulic manifold block 30 not having the supply port 31 and the discharge port 32. A gap may be provided between the hydraulic manifold block 30 and the valve ECU 20.

The same number of drive lines 25 as the number of proportional valve blocks 10 are then connected to the drive connector 25A. The drive connector 25A which is to be connected to the electromagnetic proportional valves 11 on the left side is connected to the left-side connector 22 of the valve ECU 20. The drive lines 25 on the left side are connected at the second ends thereof to the electromagnetic proportional valves 11. Similarly, the drive connector 25A which is to be connected to the electromagnetic proportional valves 11 on the right side is connected to the right-side connector 23 of the valve ECU 20. The drive lines 25 on the right side are connected at the second ends thereof to the electromagnetic proportional valves 11.

The valve ECU 20 and the main body ECU 2 are connected by the control line 3. The main body-side connector 3A of the control line 3 is connected to the main body ECU 2. The valve-side connector 3B of the control line 3 is connected to the top-surface connector 21 of the valve ECU 20. Therefore, the control valve 1 can be installed on the construction machine with the valve ECU 20 and each electromagnetic proportional valve 11 connected previously. Then, the wiring work between the valve ECU 20 of the control valve 1 and the main body ECU 2 of the construction machine can be completed only by connecting the control line 3.

### <Advantageous Effects of First Embodiment>

Advantageous effects of the first embodiment will be now described. (1-1) The valve ECU 20 receives drive signals from the main body ECU 2 to drive the electromagnetic proportional valves 11. The valve ECU 20 is connected to each of the electromagnetic proportional valves via corresponding one of the plurality of drive lines 25. Therefore, there is no need to connect the main body ECU 2 to each of the electromagnetic proportional valves 11 via the drive lines. The wiring work is easy because the wiring work can be completed simply by connecting the valve ECU 20 provided in the control valve 1 to each of the electromagnetic proportional valves 11 via the drive lines 25.
(1-2) The left-side connector 22 and the right-side connector 23, to which multiple drive lines 25 are connected, are provided on the valve ECU 20. This facilitates the connection of the drive lines 25 to the valve ECU 20.
(1-3) The left-side connector 22 and the right-side connector 23 are provided on both sides of valve ECU 20 in the axial direction of spools 12. Therefore, the electromagnetic proportional valves 11 of the control valve 1 can be connected to the left-side connector 22 or the right-side connector 23 at the shortest distance via the drive lines 25. As a result, the drive lines 25 can be short.
(1-4) The valve ECU 20 is provided at the end of the plurality of proportional valve blocks 10 stacked together in the stacking direction, the end not having the supply port 31 and the discharge port 32. This inhibits the pipes for the supply port 31 and the discharge port 32 and the drive lines 25 from being located close to each other, facilitating the wiring work of the drive lines 25.

### <Second Embodiment>

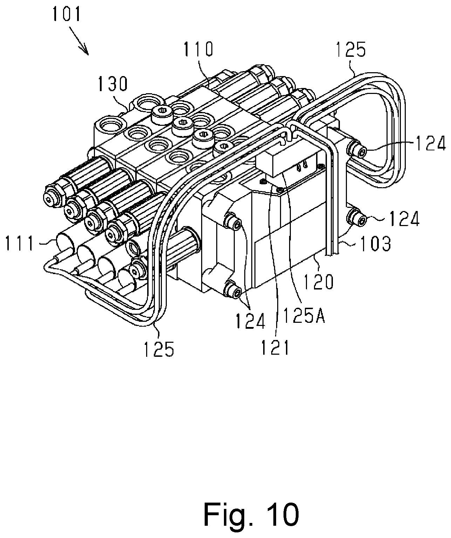

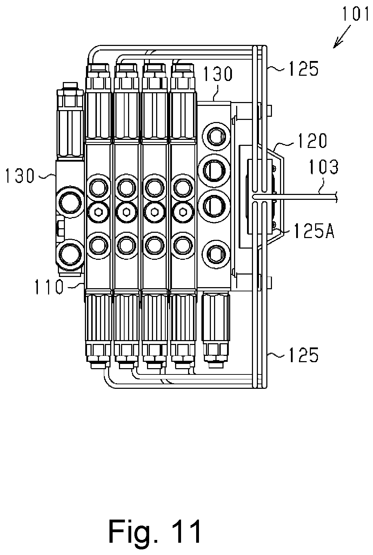

The second embodiment of the control valve embodied in a construction machine is described below with reference to Figs. 10 and 11. The control valve of this embodiment differs from the first embodiment described above in the connection position of the drive lines. The following description will be focused on the differences from the first embodiment.

### <Control Valve 101>

As shown in Figs. 10 and 11, the control valve 101 includes a plurality of proportional valve blocks 110, a valve ECU 120, hydraulic manifold blocks 130, and a plurality of drive lines 125. The control valve 101 includes four proportional valve blocks 110 stacked together in the stacking direction. The hydraulic manifold blocks 130 are provided on both ends of the proportional valve blocks 110 in the stacking direction. The valve ECU 120 is fixed by bolts 124 to the hydraulic manifold block 130 not having a supply port and a discharge port. The valve ECU 120 corresponds to the valve control unit. The plurality of drive lines 125 connect the valve ECU 120 to each of the electromagnetic proportional valves 111. Each of the drive lines 125 conveys a drive current flowing from the valve ECU 120 to the electromagnetic proportional valve 111.

### <Valve ECU 120>

The valve ECU 120 receives a drive signal from the main body ECU 2 via the control line 103 and outputs drive current via the drive lines 125. The valve ECU 120 includes a top-surface connector 121. The top-surface connector 121 is provided on the top surface of the valve ECU 120 and connected to the control line 103 and the drive lines 125.

A main body-side connector (not shown) is provided at one end of the control line 103. A drive connector 125A is provided at the other end of the control line 103. The drive connector 125A is connected to the top-surface connector 121 of the valve ECU 120.

The drive lines 125 connected to the electromagnetic proportional valves 111 on the left side and the drive lines 125 connected to the electromagnetic proportional valves 111 on the right side are all connected at first ends thereof to the drive connector 125A. The drive connector 125A is connected to the top-surface connector 121 of the valve ECU 120. Therefore, the control line 103 and the drive lines 125 can be connected to the valve ECU 120 simply by connecting the drive connector 125A to the valve ECU 120.

### <How Second Embodiment Works>

The following now describes how the above-described control valve 101 works with reference to Figs. 10 and 11.

The control valve 101 includes the same number of proportional valve blocks 110 as the number of hydraulic actuators on the construction machine. These proportional valve blocks 110 are stacked together in the stacking direction. The hydraulic manifold blocks 130 are connected to both ends of the proportional valve blocks 110 in the stacking direction. The valve ECU 120 is then fixed by bolts 124 to the hydraulic manifold block 130 not having the supply port and the discharge port. A gap may be provided between the hydraulic manifold block 130 and the valve ECU 120.

Twice as many drive lines 125 as proportional valve blocks 110 are connected to the drive connector 125A. The drive connector 125A is connected to the top-surface connector 121 of the valve ECU 120.

The valve ECU 120 and the main body ECU are connected by the control line 103. The main body-side connector (not shown) of the control line 103 is connected to the main body ECU. The drive connector 125A of the control line 103 is connected to the top-surface connector 121 of the valve ECU 120. Therefore, the control valve 101 can be installed on the construction machine with the valve ECU 120 and each electromagnetic proportional valve 111 connected previously. Then, the wiring work between the valve ECU 120 of the control valve 101 and the main body ECU of the construction machine can be completed only by connecting the control line 103.

### <Advantageous Effects of Second Embodiment>

Advantageous effects of the second embodiment will be now described. The following advantageous effects are obtained in addition to the advantageous effects (1-1) and (1-2) of the first embodiment.
(2-1) The top-surface connector 121 is provided on the top surface of the valve ECU 120. This reduces the length of the control valve 101 in the stacking direction of the proportional valve blocks 110.

### <Other Embodiments>

The above embodiments can be modified as described below. The above embodiments and the following modifications can be implemented in combination to the extent where they are technically consistent with each other.

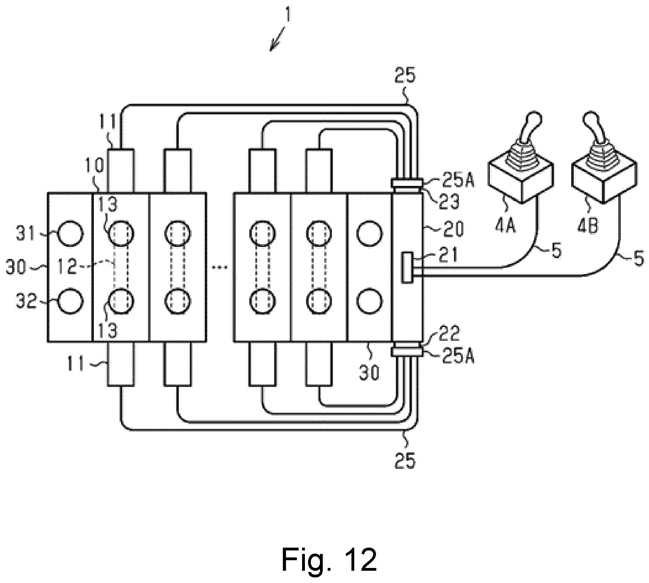

As shown in Fig. 12, the construction machine may include a control valve 1, a left joystick 4A, a right joystick 4B, and control lines 5. The control valve 1 receives direct input of operation signals from the left joystick 4A and the right joystick 4B via the control lines 5. The left joystick 4A and the right joystick 4B correspond to the operation unit. The control lines 5 transmit signals by means of signal communication such as CAN (Controller Area Network) communication. The signals are, for example, analog voltage signals, PWM (Pulse Width Modulation) signals, PS232C, RS485, etc. When the left joystick 4A and the right joystick 4B are operated, operation signals are input directly from the left joystick 4A and the right joystick 4B to the control valve 1. The valve ECU 20 outputs drive current to the electromagnetic proportional valves 11 based on the operation signals. With this configuration, when the left joystick 4A and the right joystick 4B are operated, the control valve 1 can be controlled by the valve ECU 20, without need of the main body ECU.

The number of proportional valve blocks 10 or 110 in the above embodiments may be modified as desired to match the number of hydraulic actuators on the construction machine. The number of drive lines should be modified to match the number of proportional valve blocks.

In the above embodiments, the supply port 31 and discharge port 32 may be provided in the hydraulic manifold block 30 on the side where the valve ECU 20 is provided. In the above embodiments, a bottom-surface connector may be provided on the bottom surface of the valve ECU 120. Such configuration reduces the length of the control valve 101 in the stacking direction of the proportional valve blocks 110.

In the above embodiments, a front connector may be provided on the front surface of the valve ECU 20 or 120 in the stacking direction of the proportional valve blocks 10 or 110, that is, the surface perpendicular to the stacking direction. Such configuration reduces the height of the control valve 101 in the top-bottom direction.

The foregoing embodiments describe a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

## Claims

1. A control valve (1) comprising:
a plurality of proportional valve blocks (10) stacked together in a stacking direction, each proportional valve block including an electromagnetic proportional valve (11) for controlling supply of fluid from a supply source to the proportional valve block and discharge of the fluid from the proportional valve block; and
a valve control unit (20) connected to each electromagnetic proportional valve by corresponding one of a plurality of drive lines (25), the valve control unit (20) being configured to output drive current for driving the electromagnetic proportional valves through the plurality of drive lines.

2. The control valve (1) according to claim 1, wherein the valve control unit (20) receives from a main body control unit (2) of a construction machine a drive signal for driving the electromagnetic proportional valves (11).

3. The control valve (1) according to claim 2, wherein the valve control unit (20) has a connector (21, 22, 23) for connection with the plurality of drive lines (25).

4. The control valve (1) according to claim 3,
wherein the electromagnetic proportional valve (11) is a first electromagnetic proportional valve, and the connector (22) is a first connector,
wherein each proportional valve block (10) further includes a spool (12) extending in an axial direction, a second electromagnetic proportional valve (11), and a second connector (23), and the first electromagnetic proportional valve and the second electromagnetic proportional valve are provided on both sides of the spool in the axial direction, and
wherein the first connector and the second connector are provided on both sides of the valve control unit (20) in the axial direction.

5. The control valve (1) according to claim 3,
wherein the electromagnetic proportional valve (11) is a first electromagnetic proportional valve,
wherein each proportional valve block (10) further includes a spool (12) extending in an axial direction and a second electromagnetic proportional valve (11), and the first electromagnetic proportional valve and the second electromagnetic proportional valve are provided on both sides of the spool in the axial direction, and
wherein the connector (21) is provided on a surface of the valve control unit (20), the surface being perpendicular to a direction orthogonal to both the stacking direction and the axial direction of the spool.

6. The control valve (1) according to claim 3,
wherein the electromagnetic proportional valve (11) is a first electromagnetic proportional valve,
wherein each proportional valve block (10) further includes a spool (12) extending in an axial direction and a second electromagnetic proportional valve (11), and the first electromagnetic proportional valve and the second electromagnetic proportional valve are provided on both sides of the spool in the axial direction, and
wherein the connector is provided on a surface of the valve control unit (20), the surface being perpendicular to the stacking direction.

7. The control valve (1) according to any one of claims 1 to 6,
wherein a supply port (31) for supplying the fluid and a discharge port (32) for discharging the fluid are provided at one end of the plurality of proportional valve blocks (10) in the stacking direction, and
wherein the valve control unit (20) is provided at another end of the plurality of proportional valve blocks in the stacking direction.

8. A construction machine comprising:
the control valve (1) according to any one of claims 1 to 6; and
the main body control unit (2) for outputting the drive signal.

9. A construction machine comprising:
the control valve (1) according to claim 1; and
an operation unit (4A, 4B) for outputting an operation signal,
wherein the valve control unit (20) outputs drive current for driving the electromagnetic proportional valves (11) based on the operation signal input from the operation unit.
